# EUROPEAN PATENT SPECIFICATION

(11) **EP 3 581 755 B1**
(45) Date of publication and mention of the grant of the patent: **07.04.2021**
(21) Application number: 19180176.0
(22) Date of filing: 14.06.2019
(51) Int. Cl.: E06C 1/32, E06C 7/50

(54) **LADDER HINGE WITH DUAL LOCK-PINS**
LEITERSCHARNIER MIT DOPPELTEN SICHERUNGSSTIFTEN
CHARNIÈRE D'ÉCHELLE COMPRENANT DEUX GOUPILLES DE VERROUILLAGE

(30) Priority: 14.06.2018 TW 107208172 U
(43) Date of publication of application: 18.12.2019
(73) Proprietor: Yeh, Kang-Shuo, Keelung City, Taiwan 204 (TW)
(72) Inventor: Yeh, Kang-Shuo, Keelung City, Taiwan 204 (TW)
(74) Representative: Kilian Kilian & Partner

(56) References cited:
- DE-A1- 4 431 179
- US-A- 4 890 950

## Description

### CROSS-REFERENCE TO RELATED APPLICATIONS

The application claims priority from Taiwan Patent Application No. 107208172 filed on June 14, 2018.

### BACKGROUND OF THE INVENTION

### 1. Field of Invention:

The present invention relates to a ladder hinge with dual lock-pins, and particularly to improvement of locking device provided in the ladder hinge having two lock-pins.

### 2. Description of Prior Art:

U.S. Patent No. 4,566,150 and U.S. Patent No. 6,711.780B2 disclose a ladder hinge with two locking pins respectively; when the ladder hinge is at locked state, the two locking pins pass through the locking apertures of the ladder hinge, and when the ladder hinge is at unlocked state, the two locking pins are withdrawn from the locking apertures: however, there are no structural arrangements for the locking pins to hold the hinge plates at unlocked state. Taking U.S. Patent No. 4,566,150 as an example, the unlocked state is achieved by compression springs forcing a ball bearing to press the partial spherical recesses provided at the shaft. European Patent Application Publication No. EP0931804 recites several prior ladder hinge structures in description of the prior art, one of the prior ladder hinge (corresponding to Korean Patent Application Laid-Open No. 89-10840) is similar to the above-said U.S. Patent No. 4,566,150 and U.S. Patent No. 6,711,780B2 with no structural arrangement provided at the locking pins for conducting the unlocked state of the ladder hinge; another one of the prior ladder hinge (corresponding to Korean Patent Application Laid-Open No. 95-9197) provides projections at the free ends of the two locking pins corresponding to extending slots of the locating holes of the ladder hinge to operate the unlocked state of the ladder hinge. In addition, the ladder hinge disclosed in European Patent Publication No. EP1182322B1 have three locking pins with projections at the free ends thereof corresponding to three extending slots of the locating holes to carry out the unlocked state. Furthermore, from German Patent Publication No. DE 44 31 179 A1, a ladder hinge according to the preamble of claim 1 is known.

The preceding prior art related to ladder hinge provided with two locking pins have deficiencies such as complicated structures, too many parts, incapable of being closed quickly and insufficient strength.

### SUMMARY OF THE INVENTION

In order to overcome above-said deficiencies , an object of the present invention is to improve the ladder hinge with dual lock-pins with which the two lock-pins are capable of holding an outer hinge shell when the ladder hinge is in the unlocked state.

Another object of the present invention is to improve the ladder hinge with dual lock-pins with which the strength of the ladder hinge is reinforced substantially.

For achieving the preceding objects, the ladder hinge with dual lock-pins according to the present invention comprises an outer hinge member, an inner hinge member, a pivot and a locking device. The outer hinge member consists of a first outer hinge shell and a second outer hinge shell oppositely joined together; with two opposite lock-holes, respectively; the inner hinge member consists of a first inner hinge shell and a second inner hinge shell with three pairs of locating holes, respectively. The pivot joins the outer hinge member and the inner hinge member. The locking device consisting of a push knob, a compression spring and a lock-pin assembly; the lock-pin assembly has a handle, a linking shaft secured to the push knob, and two lock-pins corresponding to the lock-holes of the outer hinge member. The lock-pins are provided with a holding groove near the free ends thereof respectively, partially crossing the lock-pins from the peripheral surfaces thereof, and being oppositely disposed to face outward; the lock-pins each are further provided with an inclined arc surface respectively at the free ends thereof and at the back of the respective holding groove. When the second outer hinge shell at peripheries of the lock-holes are trapped into the holding grooves, the ladder hinge is in a unlocked state; when the inner hinge member is turned inward relative the outer hinge member to conduct closing operation, the inclined arc surface presses against the second inner hinge shell to prevent the second outer hinge shell at the peripheries of the lock-holes from departing the holding grooves.

Next, the ladder hinge with dual lock-pins according to the present invention is provided with an inward recess respectively at the first and second outer hinge shells and an outward projection respectively at the first and second inner hinge shells corresponding to the inward recess, and the inward recess and the outward projection contact with each other at the time of the inner hinge member being turned 180° outward relative to the outward hinge member to prevent the inner hinge member from being turned beyond 180°; the first and second outer hinge shells are provided with an engaging hole next to the inner recesses for being joined each other with a rivet which is capable of preventing the inner hinge member from being turned beyond 180° relative to the outer hinge member as well. Hence, double protections of the inner hinge member from being turned 180° can be obtained and the strength of the ladder hinge can be intensified when the outer hinge member and the inner hinge member are 180° apart from each other.

Further, the ladder hinge with dual lock-pins according to the present invention is provided with reinforcing ribs at the outer hinge member and the inner hinge member to strengthen the ladder hinge as well.

The ladder hinge with dual lock-pins according to the present invention is operated by that when the inner hinge member is turned outward relative to the outer hinge member, the free ends of the lock-pins contact and are guided into one of the three pairs of the locating holes of the inner hinge member, and at the time, the second outer hinge shell at peripheries of the lock-holes are blocked by the holding grooves till the free ends of the lock-pins completely entering said pair of locating holes with the linking shaft and the push knob moving along with the round lock-pins; under the circumferences, the compression spring is released from being compressed and the second outer hinge shell at peripheries of the lock-holes are forced to depart the holding grooves by resilience of the compression spring, and the lock-pins pass through the inner hinge member and outer hinge member to reach the locked state.

Furthermore, the ladder hinge with dual lock-pins according to the present invention is also operated by that when the inner hinge member is turned inward relative to the outer hinge member to close the ladder hinge, the free ends of the round lock-pins keep on pressing against the second inner hinge shell to contact and enter one of the three pairs of the locating holes of the second inner hinge shell, right at the time, the inner hinge member turns inward relative to the outer hinge member continuously to cause the peripheries of the pair of locating holes push the inclined arc surfaces at the free ends of the round lock-pins; under the circumferences, it results in the second outer hinge shell at the peripheries of the lock-holes keeping to stay in the holding grooves of the round lock-pins in spite of the free ends of the round lock-pins are pushed and moved outward by the second inner hinge shell at the peripheries of the pair of locating holes, and the ladder hinge keeps in the unlocked state during closing.

In a preferred embodiment of the ladder hinge with dual lock-pins according to the present invention, the lock-holes of the outer hinge member and locating holes of the inner hinge member are round holes.

In a preferred embodiment of the ladder hinge with dual lock-pins according to the present invention, the holding grooves of the lock-pins are waxing crescent moon shaped grooves with a circular bottom having a radius equal to the radius of the cross section of the respective lock-pins and an angular distance between two ends of the circular bottom with respect to a center line of the cross section is greater than 180°.

In another preferred embodiment of the ladder hinge with dual lock-pins according to the present invention, the lock-holes and locating holes are square holes.

In another preferred embodiment of the ladder hinge with dual lock-pins according to the present invention, the holding grooves of the lock-pins are straight grooves and depths of the straight grooves are less than a half side of cross section of the respective square lock-pins.

In a preferred embodiment of the ladder hinge with dual lock-pins according to the present invention, the handle of the lock-pin assembly is a circular plate shaped handle.

In a further embodiment of the ladder hinge with dual lock-pins according to the present invention, the handle of the lock-pin assembly is a knob shaped handle.

### BRIEF DESCRIPTION OF THE DRAWINGS

The present invention can be more fully understood by reference to the following description and accompanying drawings, in which:
Fig. 1 is a disassembled perspective view of a ladder hinge with dual lock-pins according to the first embodiment of the present invention;
Figs. 2 is a perspective view of an enlarged lock pin assembly of the ladder hinge with dual lock pins according to the ladder hinge in the first embodiment of the present invention;
Fig. 3 is a partly side view of the lock pins of the ladder hinge with dual lock pins according to the ladder hinge in the first embodiment of the present invention, wherein a holding groove is shown therein;
Fig. 4 is a sectional view of the holding groove at the lock pin shown in Fig. 3;
Fig. 5 is a perspective view illustrating the ladder hinge in the first embodiment of the present invention in unlocked state;
Fig. 6 is a side view of the ladder hinge of the first embodiment according to the present invention at the unlocked state, wherein the outer hinge member, the inner hinge member and the pivot are shown with cross sections:
Fig. 7 is a top view of the ladder hinge of the first embodiment according to the present invention at unlocked state;
Fig.8 is a perspective view illustrating the ladder hinge in the first embodiment according to the present invention at locked state;
Fig. 9 is a side view of the ladder hinge in the first embodiment according to the present invention at locked state, wherein the outer hinge member, the inner hinge member and the pivot are shown with cross sections;
Figs 10A and 10B, which are similar to Fig. 7, are top views of the ladder hinge in the first embodiment according to the present invention illustrating positions of the lock-pins relative to the outer and inner hinge members at the time of the inner hinge members being turned outward relative to the outer hinge members;
Figs 11A and 11B, which are similar to Fig. 7, are top views of the ladder hinge in the first embodiment according to the present invention illustrating positions of the lock-pins at the outer and inner hinge members when the inner hinge member is turned inward relative to the outer hinge members.
Fig. 12A is a schematic diagram illustrating the ladder hinge in the first embodiment according to the present invention being turned 0° from completely closed and locked at the angular position 0°;
Fig. 12B is a schematic diagram illustrating the inner hinge member of the ladder hinge in the first embodiment according to the present invention being turned outward 35° relative to the outer hinge members and locked at the angular position 35°;
Fig. 12C is a schematic diagram illustrating the inner hinge member of the ladder hinge in the first embodiment of the present invention being turned outward 105° relative to the outer hinge member and locked at the angular position 105°;
Fig. 12D is a schematic diagram illustrating the inner hinge member of the ladder hinge in the first embodiment of the present invention being turned outward 180° relative to the outer hinge member and locked at the angular position 105°;
Fig. 13 is a perspective view of another lock-pin assembly in the ladder hinge of the present invention similar to Fig. 2 illustrating the handle thereof being a knob-shaped handle;
Fig. 14 is a disassembled perspective view of a ladder hinge with dual lock-pins in the second embodiment according to the present invention;
Figs. 15 is a perspective view of an enlarged lock-pin assembly of the ladder hinge with dual lock-pins in the second embodiment according to the present invention.

### DETAILED DESCRIPTION OF THE INVENTION

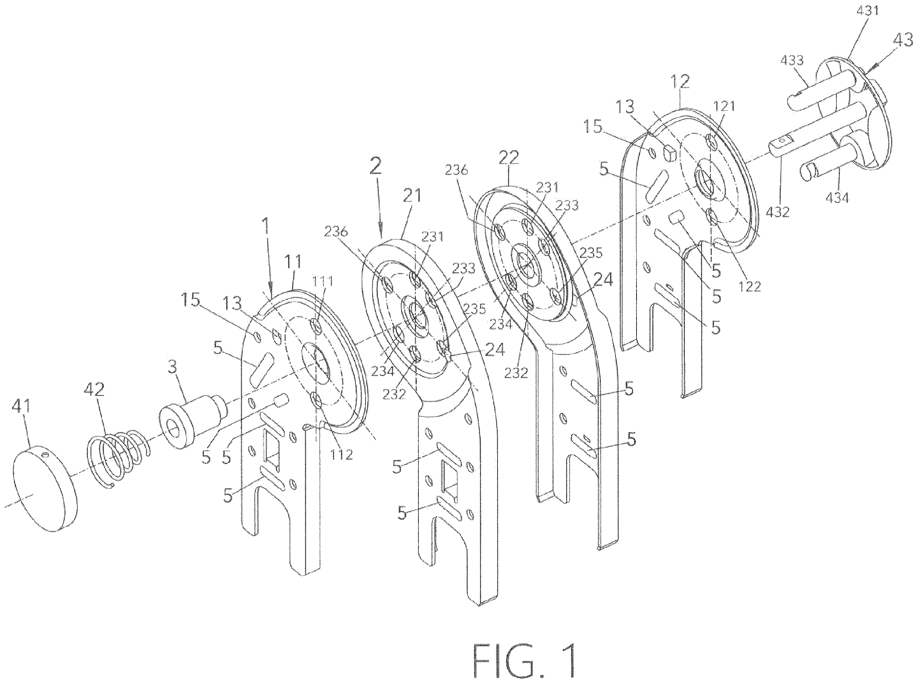

Referring to Fig. 1, a ladder hinge with dual lock pins according to the first embodiment of the present invention basically comprises an outer hinge member 1, an inner hinge member 2, a pivot 3, and a locking device consisting of a push knob 41, a compression spring 42 and a lock-pin assembly 43. The outer hinge member 1 is composed of a first outer hinge shell 11 and a second outer hinge shell 12 which are oppositely joined together with rivets and have a circular hinge portion and a straight connecting portion extending from the hinge portion respectively, The inner hinge member 2 is composed of a first inner hinge shell 21 and a second inner hinge shell 22 which are oppositely joined together with rivets and also have a circular hinge portion and a straight connecting portion extending from the hinge portion respectively. The hinge portions of the two inner hinge shells 21, 22 are disposed between the hinge portions of the two outer hinge shells 11, 12, and all the hinge portions have axial holes corresponding to one another. The pivot 3 is riveted to the axial holes and to allow the outer hinge member 1 and the inner hinge member 2 movably joined each other by the pivot 3 for the outer hinge member 1 and the inner hinge member 2 capable of being operated to turn outward or inward relative to each other with respect to pivot 3. The first outer hinge shell 11 is provided two opposite round lock-holes 111, 112, and the second outer hinge shell 12 provides two opposite round lock-holes 121, 122 as well corresponding to the two round lock-holes 111,112; the round lock holes 111, 112, 121, 122 are disposed at vertical center lines of the axial holes of the first and second outer hinge shells 11, 12, respectively as it shown Fig. 1. The inner hinge member 2 provides three pairs of round locating holes (231, 232), (233, 234), (235, 236) passing through the first and second inner hinge shells 21, 22 and being capable of aligning with the round lock-holes 111, 112, 121, 122 respectively for the ladder hinge being turned to different angular positions. The push knob 41 is disposed outside the outer hinge shell 11; the compression spring 42 is disposed outside the outer hinge shell 11 with two ends thereof biasing the pivot 3 and the push knob 41, respectively. The lock-pin assembly 43 provides a circular plate shaped handle 431, a linking shaft 432, and two round lock-pins 433, 434; the plate shaped handle 431 is disposed outside the second outer hinge shell 12; the linking shaft 432 has an end attached to the center of the circular plate shaped handle 43 1 and the other end thereof passes through the pivot 3 and the compression spring 42 and is secured to the center of the push knob 41; the two round lock-pins 433, 434 are parallel to the linking shaft 432. The round lock-pin 433 are disposed corresponding to the round lock-holes 111, 121 of the outer hinge member 1 and the round lock-pin 434 is disposed corresponding to the round lock-holes 112, 122. The round lock-pin 433 is capable of passing through the round lock-holes 111, 121 and the round lock-pins 434 is capable of passing through the round lock-holes 112, 122; further, the round lock-pins 433, 434 are capable of aligning with and passing through one of the three pairs of the round locating holes (231, 232), (233, 234), (235, 236) for the user being able to conduct operations of the ladder hinge.

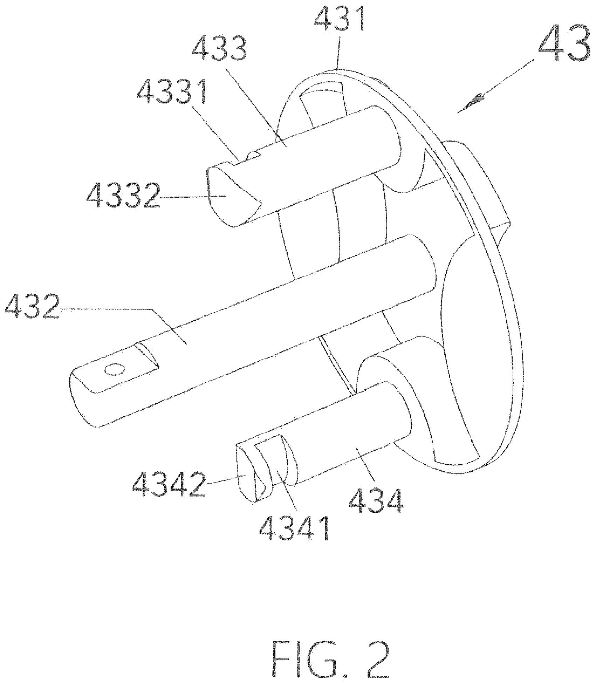

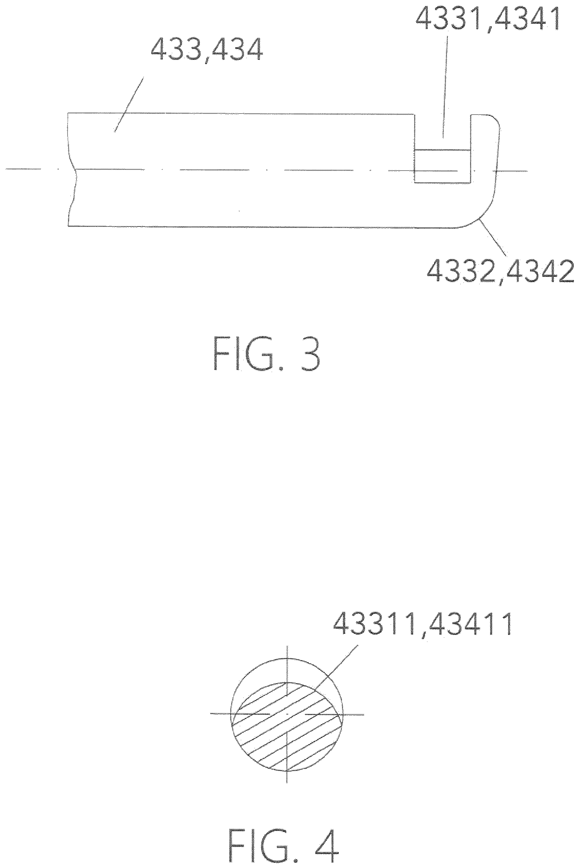

Please referring to Figs. 2, 3 and 4, the characteristics of the ladder hinge in the first embodiment according to the present invention is illustrated hereafter. The round lock-pins 433, 434 in the lock-pin assembly 43 shown in Fig. 2 have diameters thereof a little smaller than the round lock-holes 111, 112, 121, 122 and provide a holding groove 4331, 4341 near free ends of the round lock-pins 433, 434 respectively; the holding grooves 4331, 4341 have a waxing crescent moon shape, and they will be called waxing crescent moon shaped grooves 4331, 4341 hereinafter. The waxing crescent moon shaped grooves 4331, 4341 partially cross the round lock-pins 433, 434 from the outer surfaces thereof with circular bottoms 43311, 43411 as shown Fig. 4, and openings thereof facing outward oppositely; each of the circular bottoms 43311, 43411 has a radius equal to the radius of the cross section of respective round lock-pins 433, 434, and the angular distance between two ends of each of the circular bottoms 43311, 43411 with respect to the axial lines of the round lock-pins 433, 434 is greater than 180°. Besides, the free ends of the round lock-pins 433, 434 have inclined arc surfaces 4332. 4342 at the back of the waxing crescent moon shaped grooves 4331, 4341 respectively. The waxing crescent moon shaped grooves 4331, 4341 provided at the round lock-pins 433, 434 are capable of trapping the second outer hinge shell 12 at peripheries of the round lock-holes 121, 122 to keep the ladder hinge at the unlocked state. Further, the inclined arc surfaces 4332, 4342 of the round lock-pins 433, 434 are capable of biasing the second inner hinge shell 22 to resist the peripheries of the lock-holes 121, 122 moving outward the waxing crescent moon shaped grooves 4331, 4341 while the inner hinge member 2 is operated to turn inward relative to the outer hinge member 1.

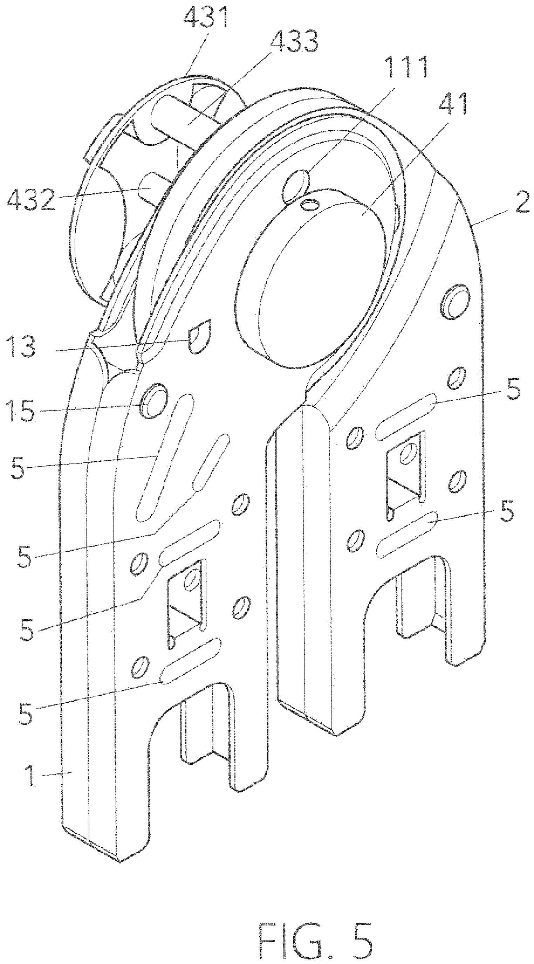

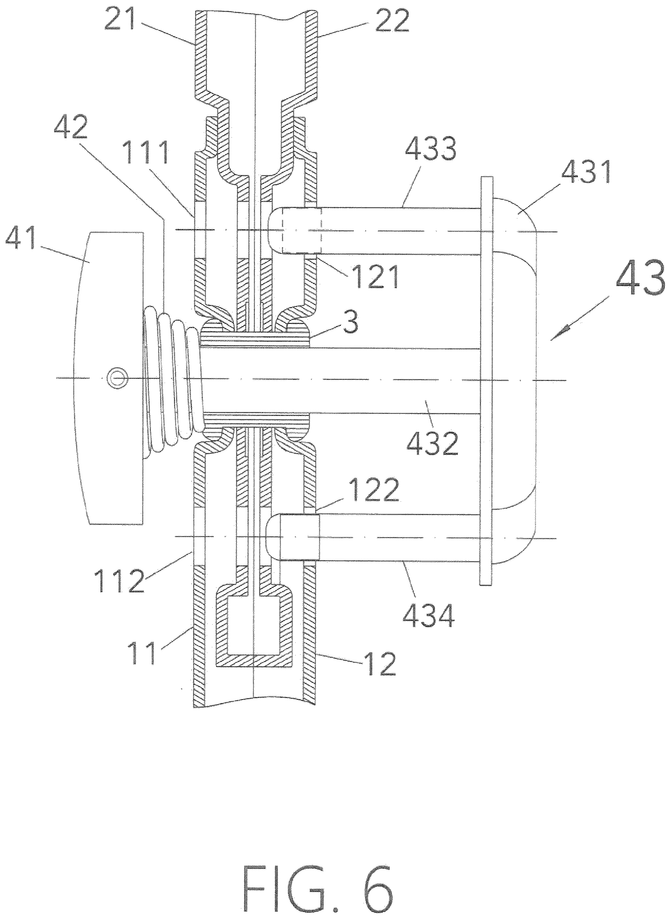

Please referring to Figs. 5, 6 and 7 in company with Fig. 1, unlocked state of the ladder hinge in the first embodiment according to the present invention is illustrated and how to achieve unlocked state are explained in details hereinafter. When the user presses the push knob 41 to the end under the circumferences of the ladder hinge being in locked state, the round lock-pin assembly 43 including the linking shaft 432 and the round lock-pins 433, 434 moves along the pressing direction, the waxing crescent moon shaped grooves 4331, 4341 of the round lock-pins 433, 434 reach to the second outer hinge shell 12 and move from one end to the other end of the respective round lock-holes 121, 122 caused by torsion generated from the compression spring 42 being compressed such that the peripheries of the round lock-holes 121, 122 fall into the waxing crescent moon shaped grooves 4331, 4341; at the time, the round lock-pins 433, 434 are not aligning with the round lock-holes 121, 122 and the free ends of the round lock-pins 433, 434 pressing against the second inner hinge shell 22 due to resilience generated by the compression spring 42 to accomplish the unlocked state.

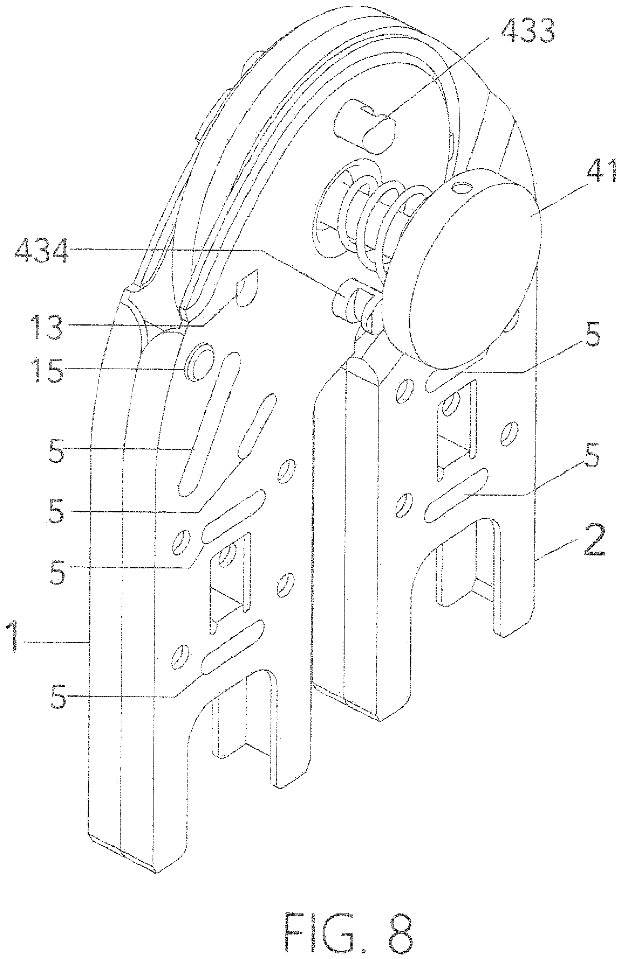

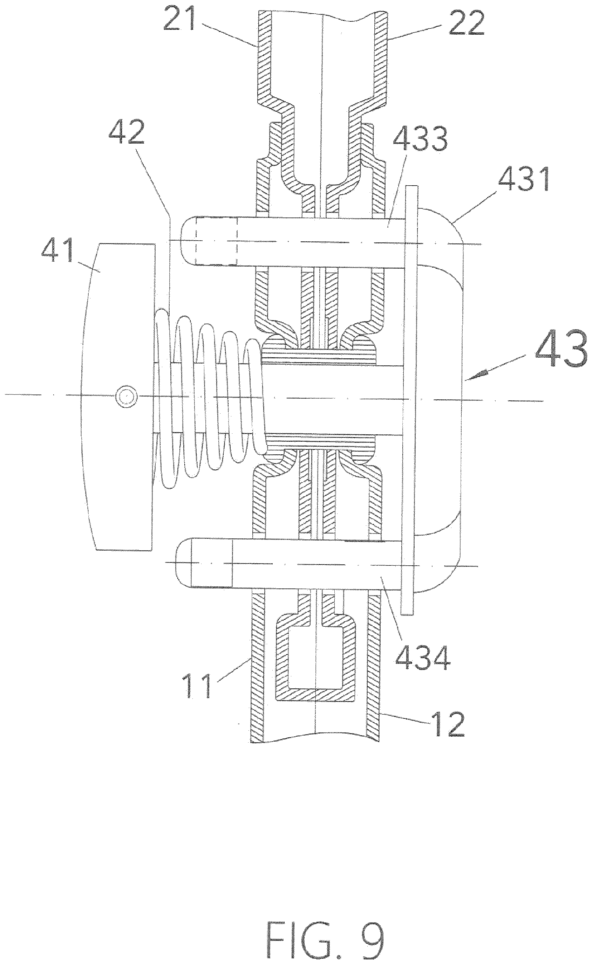

Further, please referring to Figs. 8 and 9 in company with Fig. 1, the locked state of the ladder hinge in the first embodiment according to the present invention is illustrated and how the locked state being achieved is explained hereinafter. When one of the three pairs of the round locating holes (231, 232), (233, 234), (235, 266) of the inner hinge member 2 is operated to align with the round lock-holes 111, 112, 121, 122, the compression spring 42 is released from being compressed and the resilience generated by the compression spring 42 pushes the push knob 41 back along with direction of the resilience. Under the circumferences, the round lock-pins 433, 434 pass through the round lock-holes 121, 122, one of the three pairs of the round locating holes (231, 232), (233, 234), (235, 236) and the round lock-holes 111, 112 sequentially to constitute the locked state of the ladder hinge.

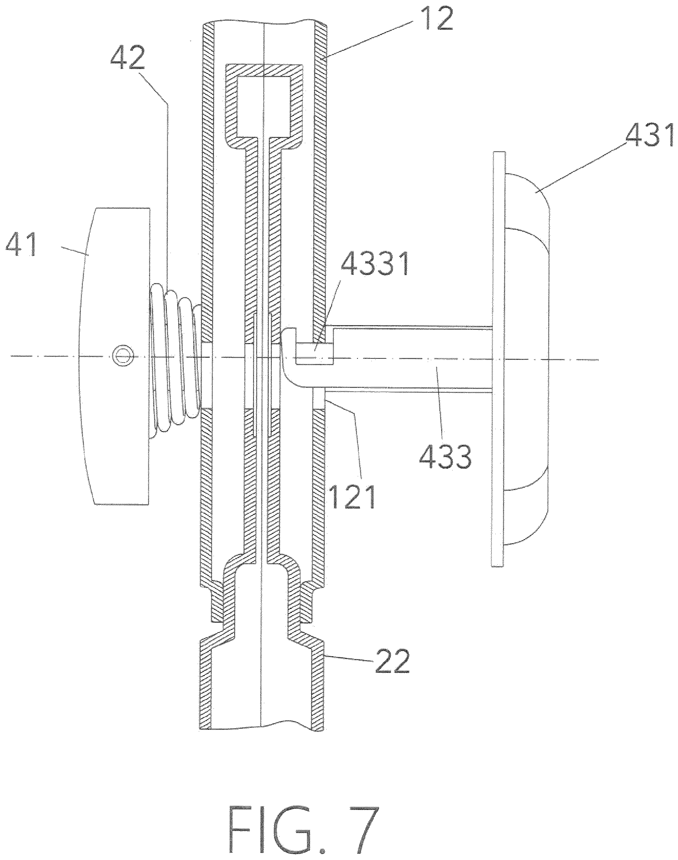

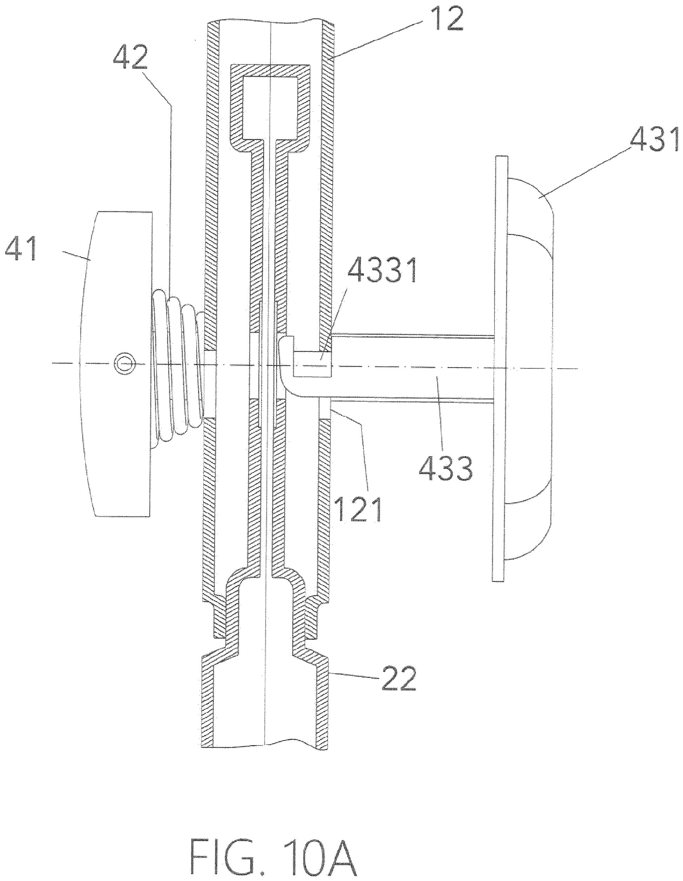

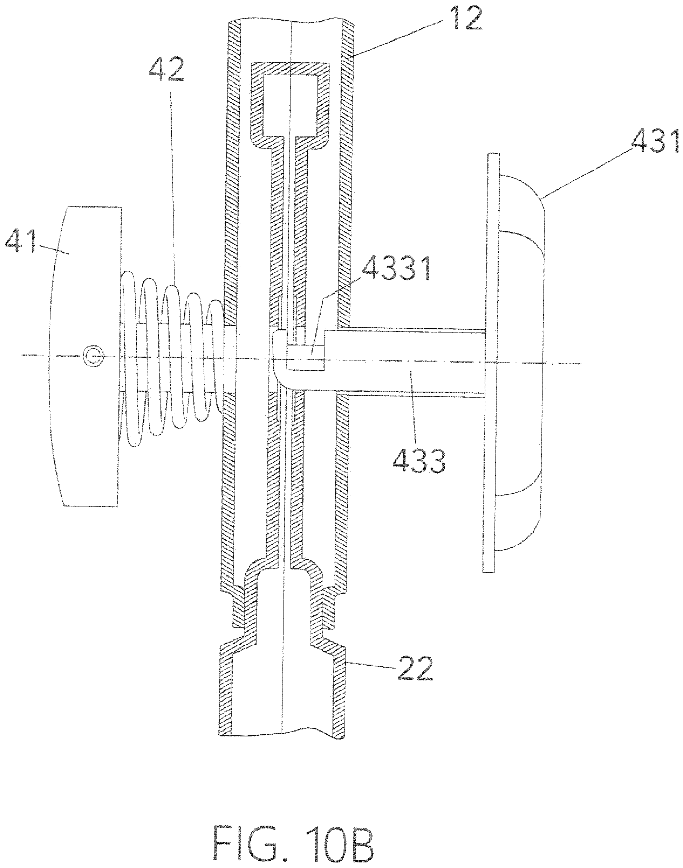

Please referring to Figs. 10A and 10B in company with Figs. 7 and 9, the ladder hinge in the first embodiment according to the present invention being opened and locked at a specific preset angular location from the unlocked state is explained underneath. It is noted that Figs. 7, 10A and 10B are top sectional views of the ladder hinge respectively and the round lock-pin 433 can be seen only; because the round lock-pins 433, 434 move synchronously, both of them are mentioned together accordingly. It can be seen in Fig. 7 clearly that when the ladder hinge is at the unlocked state, the second outer hinge shell 12 at the peripheries of the round lock-holes 121, 122 are trapped in the waxing crescent moon shaped grooves 4331, 4341 of the round lock-pins 433, 434, and the free ends of the round lock-pins 433, 434 press against the second inner hinge shell 22 due to the resilience of the compression spring 42. When operations to open the ladder hinge, that is, the inner hinge member 2 is turned outward relative to the outer hinge member 1 with respect to the linking shaft 432 till one of the three pairs of the round locating holes (231, 232), (233, 234), (235, 236) of the inner hinge member 2 contact the free ends of the round lock-pins 433, 434 as shown in Fig. 10A, the free ends of the round lock-pins 433, 434 are guided into the one of the three pairs of the round locating holes (231, 232), (233, 234), (235, 236), and at the time, the second outer hinge shell 12 at the peripheries of the round lock-holes 121, 122 thereof is still blocked by the waxing crescent moon shaped grooves 4331, 4341. When the operation of opening the hinge is kept on as shown in Fig. 10B, the free ends of the round lock-pins 433, 434 enter the one of the three pairs of the round locating holes (231, 232), (233, 234), (235, 236) with linking shaft 432 and the push knob 41 moving along with the round lock-pins 433, 434. At the time, the compression spring 42 is not compressed anymore. Due to the free ends of the round lock-pins 433, 434 entering the one of the three pairs of the circular locating holes (231, 232), (233, 234), (235, 236), the peripheries of the round lock-holes 121, 122 are forced to depart the waxing crescent moon shaped grooves 4331, 4341 completely and the inner hinge member 1 and outer hinge member 2 are passed through by the round lock-pins 433, 434 to reach the above-mentioned locked state.

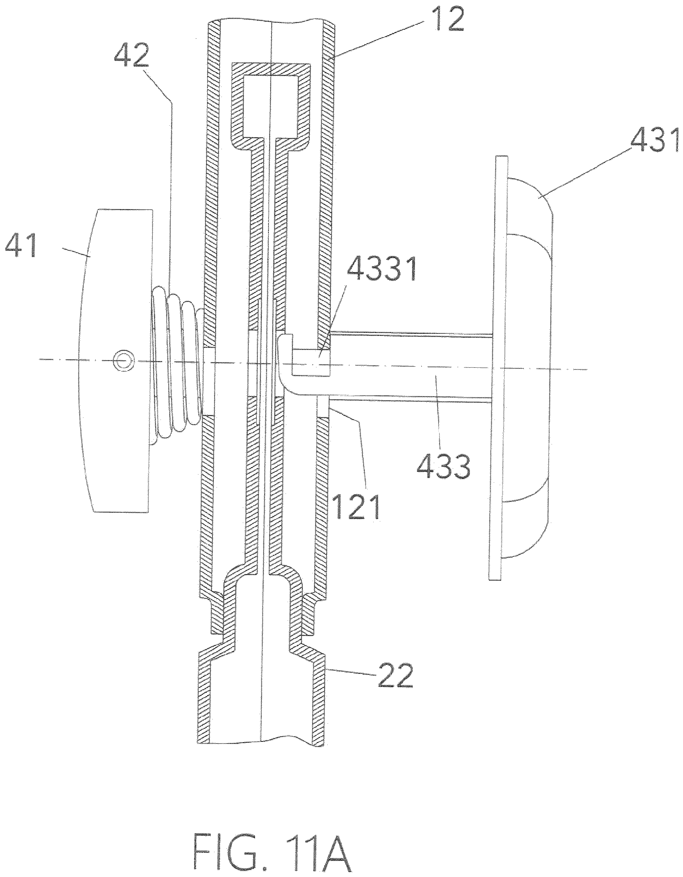

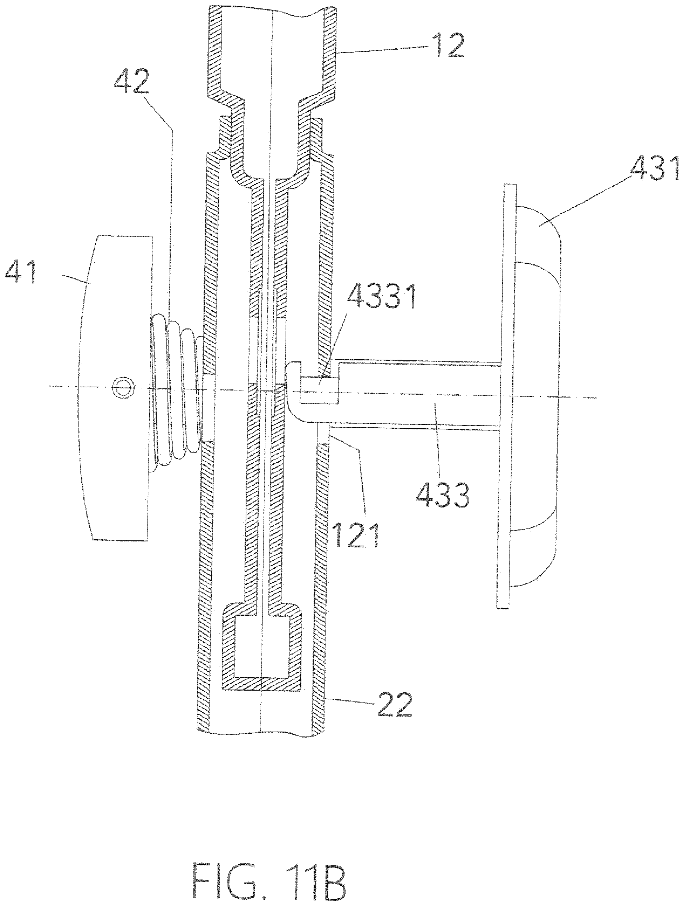

Please referring to Figs. 11A and 11B in company with Fig. 7. the ladder hinge in the first embodiment being closed from the unlocked state is illustrated and the operations are explained further hereinafter. When the ladder hinge is operated to close from the unlocked state shown in Fig. 7, that is, the inner hinge member 2 is turned inward relative to the outer hinge member 1 instead of being turned outward to open the hinge, the free ends of the round lock-pins 433, 434 keep on pressing against the inner hinge shell 22 to contact and enter one of the three pairs of the round locating holes (231, 232), (233, 234), (235, 236) as shown in Fig. 11 A; right at the time, the inner hinge member 2 turns inward relative to the outer hinge member 1 continuously to cause the peripheries of the said pair of the round locating holes push the inclined arc surface 4332, 4342 at the free ends of the round lock-pins 433, 434, and it results in the peripheries of the round lock-holes 121, 122 of the outer hinge shell 12 being kept to stay in the waxing crescent moon shaped grooves 4331, 4341 of the round lock-pins 433, 434 as shown in Fig. 11B in spite of the free ends of the round lock-pins 433, 434 being pushed and moved outward by the peripheries of the pair of round locating holes of the inner hinge shell 22. Therefore, the ladder hinge is in the unlocked state during closing. When the ladder hinge is closed completely, the round lock-pin 433 aligns with the round lock-holes 111, 121 of the outer hinge member 1 and the round locating hole 231 of the inner hinge member 2, and the round lock-pin 434 aligns with the round lock-holes 121, 122 of the outer hinge member 1 and the round locating hole 232 of the inner hinge member 2; as soon as the plate shaped handle 431 is turned slightly, the waxing crescent moon shaped grooves 4331, 4341 are detached from the peripheries of the round lock-holes 121, 122 of the outer hinge shell 12, and round lock-pins 433, 434 pass through the round lock-holes 121, 122 and the round locating holes 231,232 to constitute the locked state completely at the closed position.

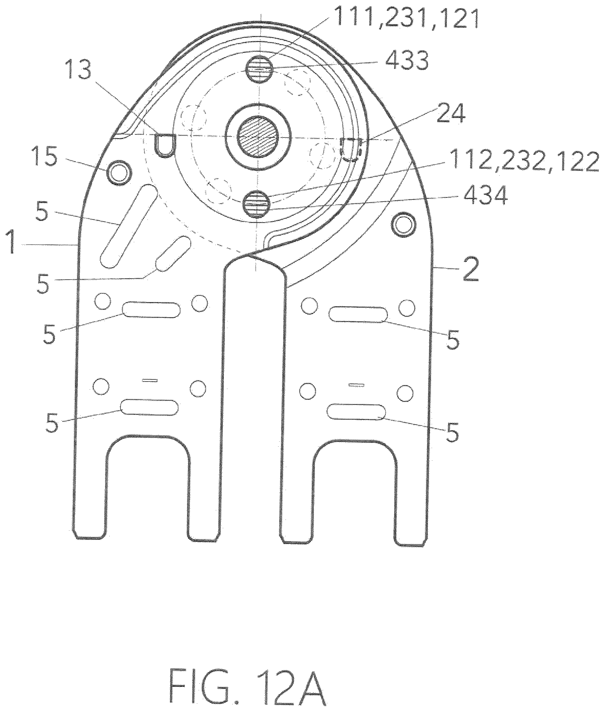

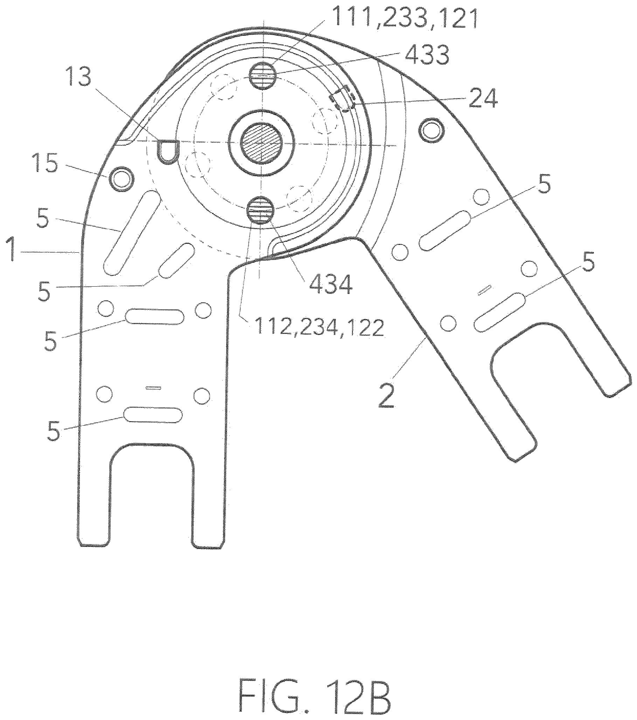

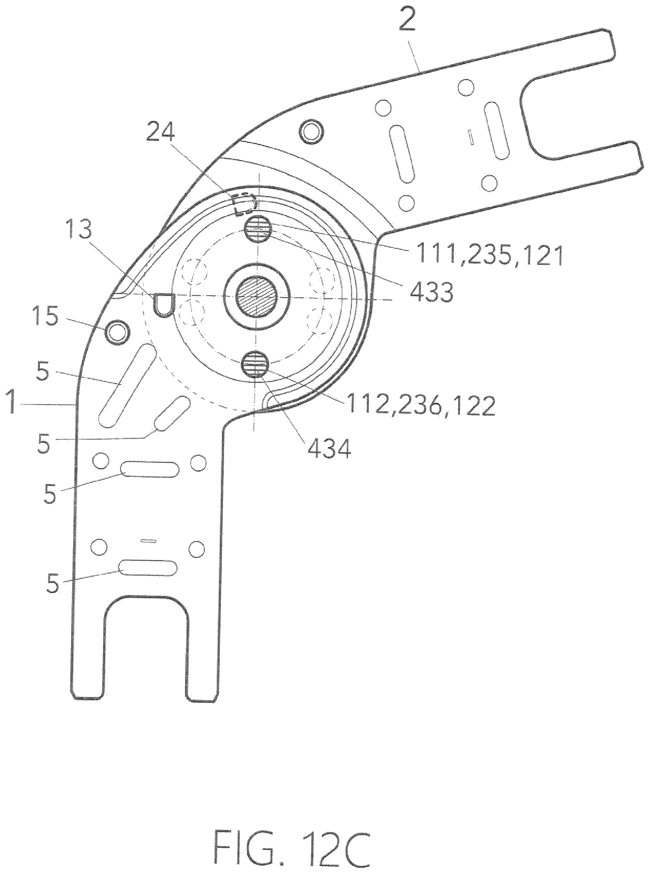

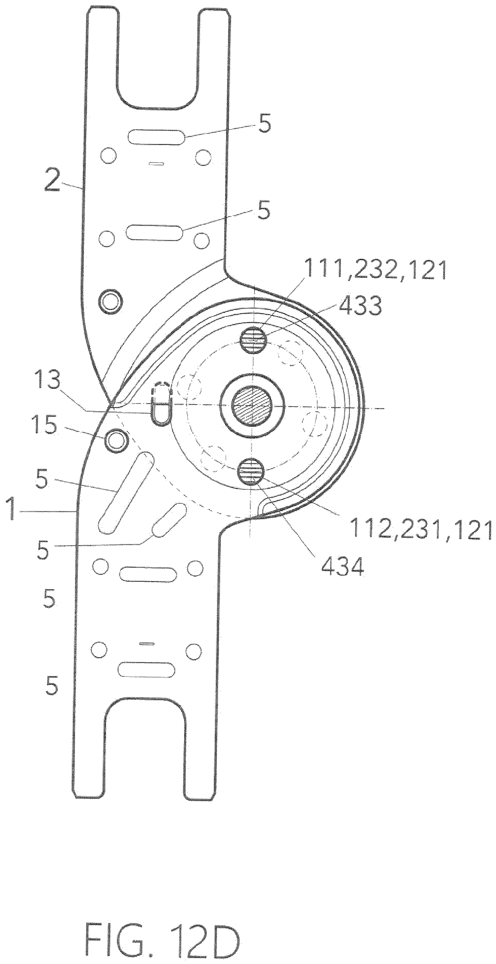

Please referring Figs. 12A to 12D, four different angular opening positions and locked states of the hinge are further explained hereinafter. Fig. 12A shows the ladder hinge is at the locked state at the completely closed position as it is mentioned above; the round lock-pin 433 passes through the round lock-holes 111, 121 of the outer hinge member 1 and the round locating hole 231 of the inner hinge member 2, and the round lock-pin 434 passes through the round lock-holes 112, 122 of the outer hinge member 1 and the round locating hole 232 of the inner hinge member 2: at the time, the inner hinge member 2 is opened 0° relative to the outer hinge member 1. Fig. 12B shows the ladder hinge is at the locked state with the inner hinge member 2 being turned 35° relative to the outer hinge member 1; the round lock-pin 433 passes through the round lock-holes 111, 121 of the outer hinge member 1 and the round locating hole 233 of the inner hinge member 2, and the round lock-pin 434 passes through the round lock-holes 112, 122 of the outer hinge member 1 and the round locating hole 234 of the inner hinge member 2. Fig. 12C shows the ladder hinge is at the locked state with the inner hinge member 2 being turned 105° relative to the outer hinge member 1; the round lock-pin 433 passes through the round lock-holes 111, 121 of the outer hinge member 1 and the round locating hole 235 of the inner hinge member 2, and the round lock-pin 434 passes through the round lock-holes 112, 122 of the outer hinge member 1 and the round locating hole 236 of the inner hinge member 2. Fig. 12D shows the ladder hinge is in a further locked state at the inner hinge member 2 being turned 180° relative to the outer hinge member 1: the round lock-pin 433 passes through the round lock-holes 111, 121 of the outer hinge member 1 and the round locating hole 232 of the inner hinge member 2, and the round lock-pin 434 passes through the round lock-holes 112, 122 of the outer hinge member 1 and the round locating hole 231 of the inner hinge member 2.

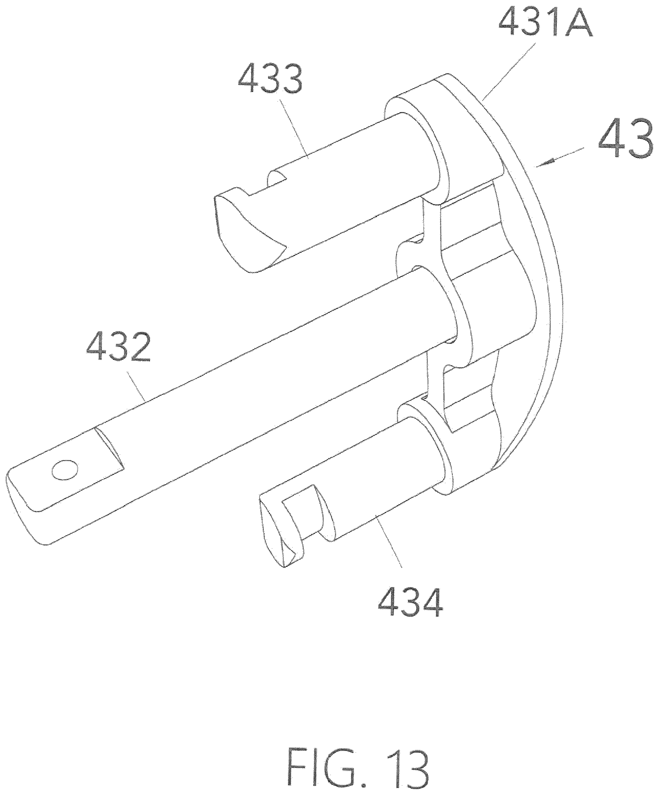

Please referring to Fig. 13 in company with Fig. 2, the lock-pin assembly 43 shown in Fig. 13 provides a knob shaped handle 431 A instead of the plate shaped handle 431 provided by the lock-pin assembly 43 shown in Fig. 2. That is, the round lock-pins 433, 434 are capable of joining the knob shaped handle 431A and the linking shaft 432 to form the lock-pin assembly 43 as well.

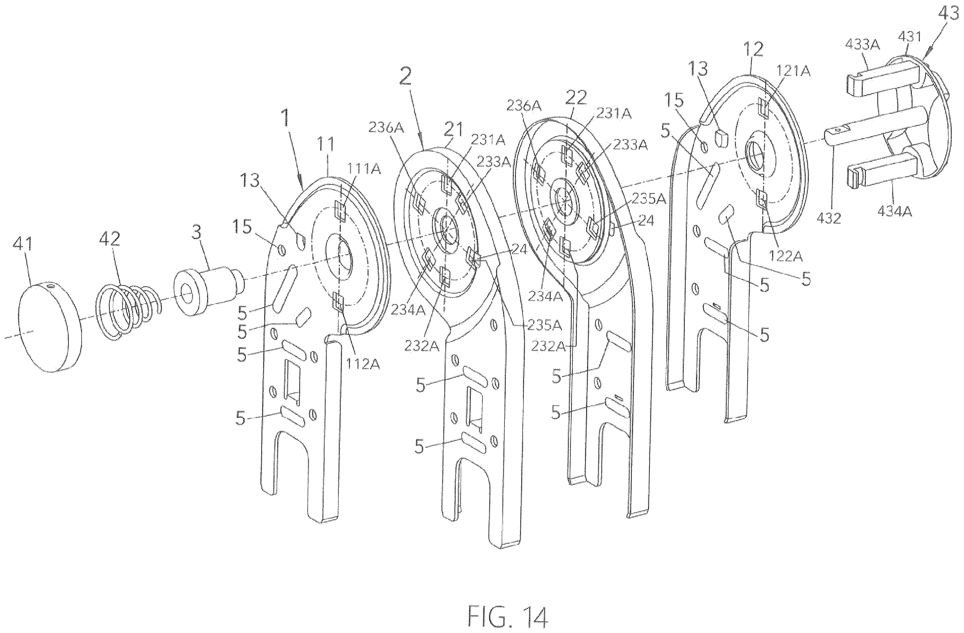

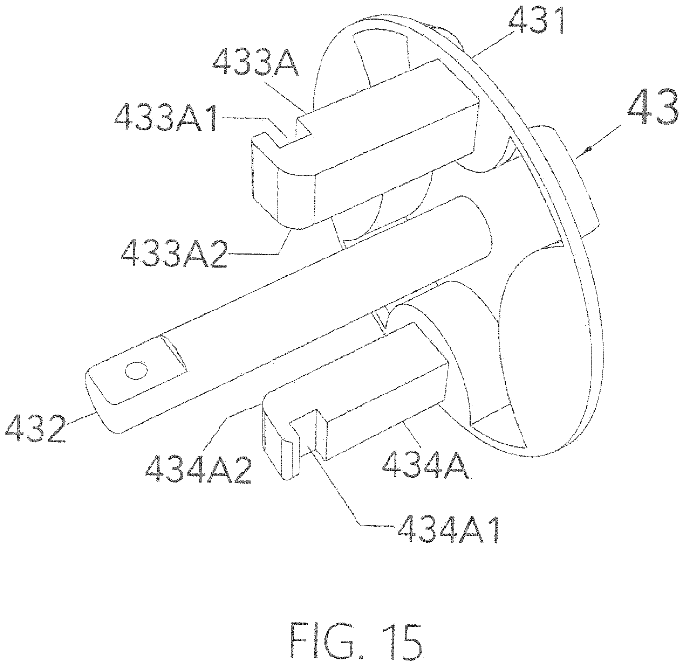

Please referring to Fig. 14 and 15, and comparing to Fig. 1, the second embodiment of the hinge according to the present invention is explained hereinafter; it is noted that in order to simplify the description, parts shown in Figs. 14 and 15, which are identical with the previously described first embodiment, are applied the same designation numerals. Basically, the second embodiment has almost same structure as the first embodiment. The differences of second embodiment from the first embodiment are square lock-pins 433A, 434A of the lock-pin assembly 4 instead of the round lock-pins 433, 434 of the first embodiment; square lock-holes 111A, 112A, 121A, 122A of the first and second outer hinge shells 11, 12 corresponding to the square lock-pins 433A, 434A instead of the round lock-holes 111, 112, 121, 122; three pairs of square locating holes (231A, 232A), (233A, 234A), (235A, 236A) instead of the three pairs of round locating holes (231, 232), (233, 234), (235, 236); the square lock-pins 433A, 434A each have a side provided with straight holding grooves 433A1, 434A1 near the free ends thereof, respectively, instead of the waxing crescent moon shaped grooves 4331, 4341 of the first embodiment, and the respective straight holding grooves 433A1, 434A1 are disposed with openings thereof facing outward respectively and depths thereof less than half side of the cross section of the respective squares lock-pins 433A, 434A; in addition, the free ends of the square lock-pins 433A. 434A have inclined arc surfaces 433A2, 434A2, respectively, disposed at the opposite sides of the straight holding grooves 433A1, 434A1 instead of the inclined arc surfaces 4332, 4342 of the first embodiment. It is noted that operations for the locked state, unlocked state, opening and closing the hinge are the same as the first embodiment, and there are no further details will be recited. Furthermore, the plate shaped handle 431 shown in Fig. 15 can be replaced with a knob shaped handle 431A shown in Fig. 13 as well.

Further, Please referring to Figs. 1 and 14 in company with Figs. 12A to 12D, the first and second outer hinge shells 11, 12 in the first and second embodiments are provided with an inward recess 13 corresponding to the locating holes 236, 236A, and the first and second inner hinge shells 21, 22 are provided with an outward projection 24 next to the locating holes 235, 235A; when the inner hinge member 2 is turned 180° outward relative to the outward hinge member 1, the inward recess 13 and the outward projection 24 contact with each other to prevent the inner hinge member 2 from being turned beyond 180°. Besides, engaging holes 15 provided at the first and second outer hinge shells 11, 12 are disposed next to the inward recess 13 to engage with a rivet (not shown) for joining the first and second outer hinge shells 11, 12 together, and the engaging holes 15 with the rivet is capable of preventing the inner hinge member 2 from being turned beyond 180° as well. Thus, double protections from being turned beyond 180° can be obtained, and the strength of the hinge at the time of the outer hinge member 1 and the inner hinge member 2 being 180° apart from each other can be intensified. In addition, the hinge portions and connection portions of the first and second outer hinge shells 11, 12 and the first and second inner hinge shells 21, 22 are provided with reinforcing ribs 5 to further strengthen the ladder hinge.

It is appreciated that improvement of the ladder hinge with dual lock pins according to the present invention is in that the round lock-pins of the locking device in the first embodiment thereof and the square lock-pins of the locking device in the second embodiment thereof provide the waxing crescent moon shaped holding grooves and the straight holding grooves, respectively, to trap the second outer hinge shell at the peripheries of the lock-holes to reach the unlocked state; the inclined arc surfaces provided at the free ends of the lock-pins opposite to the holding grooves press the inner hinge member to keep the hinge in the unlocked state during closing the hinge. Hence, the locking device of the ladder hinge is simplified in structure and convenient in operation. Furthermore, the ladder hinge according to the present invention providing the inward recesses corresponding to the outward projections at pacific spots thereof in addition to spots riveting the first and second outer hinge shells offers double protection from the ladder hinge being turned exceeding 180°. Furthermore, the outer and inner hinge members have reinforced ribs to strengthen the ladder hinge while in use. Accordingly, a ladder with the hinge of the present invention is capable of being changed in different shapes safely and easily for climbing needs while working.

While the invention has been described with reference to the preferred embodiments thereof, it is to be understood that modifications or variations may be easily made without departing from the scope of this invention defined by the appended claims.

## Claims

1. A ladder hinge with dual lock-pins comprising:
an outer hinge member (1) having a first outer hinge shell (11) and a second outer hinge shell (12) oppositely joined together with two opposite lock-holes (111, 112), (121, 122), (111A, 112A), (121A, 122A) being vertically disposed at the first and second outer hinge shells (11, 12), respectively;
an inner hinge member (2) having a first inner hinge shell (21) and a second inner hinge shell (22) oppositely joined together with three pairs of locating holes (231, 232), (233, 234), (235, 236), (231A, 232A), (233A, 234A), (235A, 236A) being disposed at the first and second inner hinge shells (21, 22) corresponding to the said two lock-holes (111, 112), (121, 122), (111A, 112A), (121A, 122A), respectively;
a pivot (3) joining the outer hinge member (1) and the inner hinge member (2) and allowing the inner hinge member (2) and the outer hinge member (1) turning relative to each other;
a locking device consisting of a push knob (41), a compression spring (42) and a lock-pin assembly (43), wherein the push knob (41) and the compression spring (42) are disposed outside the first outer hinge shell (11), two ends of the compression spring (42) bias the pivot (3) and the push knob (41) respectively, the lock-pin assembly (43) provides a handle (431, 431A) disposed outside the second outer hinge shell (12), a linking shaft (432) having an end secured to the handle (431, 431A) and another end passing through the pivot (3) and the compression spring (43) and secured to the push knob (41), and two lock-pins (433, 434), (433A, 434A) being disposed parallel to the linking shaft (432) and corresponding to the lock-holes (111, 112, 121, 122), (111A, 112A, 121A, 122A) of the outer hinge member (1) with each of the lock-pins (433, 434), (433A, 434A) having an end attached to the handle (431, 431A) and another end being free end respectively;
**characterized in that** the lock-pins (433, 434), (433A, 434A) are provided with a holding groove (4331, 4341), (433A1, 434A1) respectively near the free ends thereof, and the two holding grooves (4331, 4341, 433A1, 434A1) partially cross the lock-pins (433, 434), (433A, 434A) from peripheries thereof and oppositely disposed to face outward; the lock-pins (433, 434), (433A, 434A) are further provided with an inclined arc surface (4332, 4342) respectively at the free ends thereof and disposed at the back of the holding grooves (4331, 4341, 433A1, 434A1); the second outer hinge shell (12) at peripheries of the lock-holes (111, 112, 121, 122), (111A, 112A, 121A, 122A) is capable of being trapped into the holding grooves (4331, 4341), (433A1, 434A1) to result in the ladder hinge being at unlocked state; the inclined arc surfaces (4332, 4342), (433A2, 434A2) are capable of pressing against the second inner hinge shell (22) to prevent the peripheries of lock-holes (111, 112, 121, 122), (111A, 112A, 121A, 122A) from departing the holding grooves (4331, 4341), (433A1, 434A1) at the time of the inner hinge member (2) being turned inward relative the outer hinge member (1) to conduct closing operation.

2. The ladder hinge with dual lock-pins as defined in claim 1, wherein the lock-holes (111, 112, 121, 122) and locating holes (231, 232), (233, 234), (235, 236) are round holes.

3. The ladder hinge with dual lock-pins as defined in claim 2, wherein the holding grooves (4331, 4341) of the lock-pins (433, 434) are waxing crescent moon shaped grooves with a circular bottom having a radius equal to the radius of the cross section of the respective lock-pins (433, 434) and an angular distance between two ends of the circular bottom with respect to a center line of the cross section is greater than 180°.

4. The ladder hinge with dual lock-pins as defined in claim 1, wherein the lock-holes (111A, 112A, 121A, 122A) and locating holes (231A, 232A), (233A, 234A), (235A, 236A) are square holes.

5. The ladder hinge with dual lock-pins as defined in claim 4, wherein the holding grooves (433A1, 434A1) of the lock-pins (433A, 434A) are straight holding grooves (433A1, 434A1) and depth of each of the straight holding grooves (433A1, 434A1) is less than a half side of cross section of the respective square lock-pins (433A, 434A).

6. The ladder hinge with dual lock-pins as defined in claim 1, wherein the handle (431) is a circular plate shaped handle.

7. The ladder hinge with dual lock-pins as defined in claim 1, wherein the handle (431A) is a knob shaped handle.

8. The ladder hinge with dual lock-pins as defined in claim 1, wherein the compression spring (42) is compressed during the ladder hinge at the unlocked state, and the free ends of the lock-pins (433, 434), (433A, 434A) press against the second inner hinge shell (22) due to resilience of the compression spring (42).

9. The ladder hinge with dual lock-pins as defined in claim 1, wherein when the inner hinge member (2) is turned outward relative to the outer hinge member (1), the free ends of the lock-pins (433, 434) contact and are guided into one of the three pairs of the locating holes (231, 232), (233, 234), (235, 236) of the inner hinge member (2), and at the time, the second outer hinge shell (12) at peripheries of the lock-holes (111, 112, 121, 122) is blocked by the holding grooves (4331, 4341) till the free ends of the lock-pins completely entering said pair of locating holes (231, 232), (233, 234), (235, 236) with the linking shaft (432) and the push knob (41) moving along with the round lock-pins (433, 434); under the circumferences, the compression spring (42) is released from being compressed and the second outer hinge shell (12) at peripheries of the lock-holes (111, 112, 121, 122) are forced to depart the holding grooves (4331, 4341) by resilience of the compression spring (42), and the lock-pins (433, 434) pass through the inner hinge member (2) and outer hinge member (1) to reach the locked state.

10. The ladder hinge with dual lock-pins as defined in claim 1, wherein when the inner hinge member (1) is turned inward relative to the outer hinge member (2) to close the ladder hinge, the free ends of the round lock-pins (433, 434) keep on pressing against the second inner hinge shell (22) to contact and enter one of the three pairs of the locating holes (231, 232), (233, 234), (235, 236), right at the time, the inner hinge member (2) is turned inward relative to the outer hinge member (1) continuously to cause the peripheries of said pair of the locating holes (231, 232), (233, 234), (235, 236) push the inclined arc surfaces (4332, 4342) at the free ends of the round lock-pins (433, 434); under the circumferences, it results in the second outer hinge shell (12) at peripheries of the lock-holes (111, 112, 121, 122) keeping to stay in the holding grooves (4331, 4341) of the round lock-pins (433, 434) in spite of the free ends of the round lock-pins (433, 434) being pushed and moved outward by the second inner hinge shell at the peripheries of the pair of the locating holes (231, 232), (233, 234), (235, 236), and the ladder hinge keeps in the unlocked state during closing.

11. The ladder hinge with dual lock-pins as defined in claim 1, wherein the first and second outer hinge shells (11, 12) are provided with an inward recess (13) respectively, the first and second inner hinge shells (21, 22) are provided with an outward projection (24) respectively corresponding to the inward recess (13), and the inward recess (13) and the outward projection (24) contact with each other at the time of the inner hinge member (2) being turned 180° outward relative to the outward hinge member (1) to prevent the inner hinge member (2) from being turned beyond 180°; the first and second outer hinge shells (11, 12) are provided with an engaging hole (15) next to the inward recesses (13) for being joined each other with a rivet which is capable of preventing the inner hinge member (2) from being turned beyond 180° relative to the outer hinge member (1) as well to constitute double protections of the inner hinge member (2) from being turned 180° and intensify the strength of the ladder hinge when the outer hinge member (1) and the inner hinge member (2) are 180° apart from each other.

12. The ladder hinge with dual lock-pins as defined in claim 1, wherein the first and second outer hinge shells (11, 12) and the first and second inner hinge shells (21, 22) are provided with reinforcing ribs (5).

## Patentansprüche

1. Leiterscharnier mit doppelten Verriegelungsstiften, umfassend:
ein äußeres Scharnierelement (1), das eine erste äußere Schamierschale (11) und eine zweite äußere Schamierschale (12) aufweist, die gegenüberliegend miteinander verbunden sind, wobei zwei gegenüberliegende Verriegelungslöcher (111, 112), (121, 122), (111A, 112A), (121A, 122A) vertikal an der ersten und zweiten äußeren Schamierschale (11, 12) angeordnet sind;
ein inneres Scharnierelement (2) mit einer ersten inneren Schamierschale (21) und einer zweiten inneren Scharnierschale (22), die gegenüberliegend miteinander verbunden sind, wobei drei Paare von Positionierlöchem (231, 232), (233, 234), (235, 236), (231A, 232A), (233A, 234A), (235A, 236A) jeweils an der ersten und zweiten inneren Scharnierschale (21, 22) angeordnet sind, die jeweils den zwei Verriegelungslöchern (111, 112), (121, 122), (111A, 112A), (121A, 122A) entsprechen;
einen Drehzapfen (3), der das äußere Scharnierteil (1) und das innere Scharnierteil (2) verbindet und eine Drehung des inneren Scharnierteils (2) und des äußeren Scharnierteils (1) relativ zueinander ermöglicht;
eine Verriegelungsvorrichtung, bestehend aus einem Druckknopf (41), einer Druckfeder (42) und einer Verriegelungsstiftanordnung (43), wobei der Druckknopf (41) und die Druckfeder (42) außerhalb der ersten äußeren Schamierschale (11) angeordnet sind, wobei zwei Enden der Druckfeder (42) den Drehzapfen (3) und den Druckknopf (41) vorspannen, wobei die Verriegelungsstiftanordnung (43) einen außerhalb der zweiten äußeren Scharnierschale (12) angeordneten Griff (431, 431A), eine Verbindungswelle (432), die mit einem Ende am Griff (431, 431A) und mit einem anderen Ende durch den Drehzapfen (3) und die Druckfeder (43) hindurchgeht und am Druckknopf (41) befestigt ist, und zwei Verriegelungsstifte (433, 434), (433A, 434A), die parallel zur Verbindungswelle (432) angeordnet sind und den Verriegelungslöchern (111, 112, 121, 122), (111A, 112A, 121A, 122A) des äußeren Scharnierteils (1) entsprechen, wobei jeder der Verriegelungsstifte (433, 434), (433A, 434A) ein am Griff (431, 431A) befestigtes Ende und ein anderes freies Ende aufweist;
**dadurch gekennzeichnet, dass** die Verriegelungsstifte (433, 434), (433A, 434A) mit einer Haltenut (4331, 4341), (433A1, 434A1) jeweils in der Nähe ihrer freien Enden versehen sind, und dass die beiden Haltenuten (4331, 4341, 433A1, 434A1) die Verriegelungsstifte (433, 434), (433A, 434A) von deren Peripherien aus teilweise kreuzen und gegenüberliegend angeordnet sind, um nach außen zu weisen; wobei die Verriegelungsstifte (433, 434), (433A, 434A) an ihren freien Enden jeweils mit einer schrägen Bogenfläche (4332, 4342) versehen sind, die an der Rückseite der Haltenuten (4331, 4341, 433A1, 434A1) angeordnet sind; wobei die zweite äußere Schamierschale (12) an den Umfängen der Verriegelungslöcher (111, 112, 121, 122), (111A, 112A, 121A, 122A) in die Haltenuten (4331, 4341), (433A1, 434A1) eingeklemmt werden kann, um zu bewirken, dass das Leiterscharnier in einem entriegelten Zustand ist; wobei die schrägen Bogenflächen (4332, 4342), (433A2, 434A2) in der Lage sind, gegen die zweite innere Scharnierschale (22) zu drücken, um zu verhindern, dass die Umfänge der Verriegelungslöcher (111, 112, 121, 122), (111A, 112A, 121A, 122A) die Haltenuten (4331, 4341), (433A1, 434A1) zu dem Zeitpunkt verlassen, zu dem das innere Scharnierelement (2) relativ zu dem äußeren Scharnierelement (1) nach innen gedreht wird, um einen Schließvorgang durchzuführen.

2. Leiterschamier mit doppelten Verriegelungsstiften nach Anspruch 1, wobei die Verriegelungslöcher (111, 112, 121, 122) und die Aufnahmelöcher (231, 232), (233, 234), (235, 236) Rundlöcher sind.

3. Leiterscharnier mit doppelten Verriegelungsstiften nach Anspruch 2, wobei die Haltenuten (4331, 4341) der Verriegelungsstifte (433, 434) Nuten in der Form eines zunehmenden Mondes mit einem kreisförmigen Boden sind, der einen Radius aufweist, der gleich dem Radius des Querschnitts der jeweiligen Verriegelungsstifte (433, 434) ist, und ein Winkelabstand zwischen zwei Enden des kreisförmigen Bodens in Bezug auf eine Mittellinie des Querschnitts größer als 180° ist.

4. Leiterscharnier mit doppelten Verriegelungsstiften nach Anspruch 1, wobei die Verriegelungslöcher (111A, 112A, 121A, 122A) und Positionierlöcher (231A, 232A), (233A, 234A), (235A, 236A) Vierkantlöcher sind.

5. Leiterscharnier mit doppelten Verriegelungsstiften nach Anspruch 4, wobei die Haltenuten (433A1, 434A1) der Verriegelungsstifte (433A, 434A) gerade Haltenuten (433A1, 434A1) sind und die Tiefe jeder der geraden Haltenuten (433A1, 434A1) weniger als eine halbe Seite des Querschnitts der jeweiligen quadratischen Verriegelungsstifte (433A, 434A) beträgt.

6. Leiterscharnier mit doppelten Verriegelungsstiften nach Anspruch 1, wobei der Griff (431) ein kreisförmiger, plattenförmiger Griff ist.

7. Leiterscharnier mit zwei Verriegelungsstiften nach Anspruch 1, wobei der Griff (431A) ein knaufförmiger Griff ist.

8. Leiterscharnier mit doppelten Verriegelungsstiften nach Anspruch 1, wobei die Druckfeder zusammengedrückt ist (42), während das Leiterscharniers im entriegelten Zustand ist, und wobei die freien Enden der Verriegelungsstifte (433, 434), (433A, 434A) aufgrund der Elastizität der Druckfeder (42) gegen die zweite innere Scharnierschale (22) drücken.

9. Leiterscharnier mit doppelten Verriegelungsstiften nach Anspruch 1, wobei beim Drehen des inneren Scharnierteils (2) nach außen relativ zum äußeren Scharnierteil (1) die freien Enden der Verriegelungsstifte (433, 434) an einem der drei Paare der Positionierlöcher (231, 232), (233, 234), (235, 236) des inneren Scharnierteils (2) anliegen und darin geführt werden, und wobei gleichzeitig die zweite äußere Scharnierschale (12) an den Umfängen der Verriegelungslöcher (111, 112, 121, 122) durch die Haltenuten (4331, 4341) blockiert wird, bis die freien Enden der Verriegelungsstiftevollständig in das Paar der Positionierlöcher (231, 232), (233, 234), (235, 236) eintreten, wobei sich die Verbindungswelle (432) und der Druckknopf (41) zusammen mit den runden Verriegelungsstiften (433, 434) bewegen; wobei anhand der Umfänge die Druckfeder (42) aus der Kompression gelöst wird und die zweite äußere Scharnierschale (12) an den Umfängen der Verriegelungslöcher (111, 112, 121, 122) getrieben wird, die Haltenuten (4331, 4341) durch die Elastizität der Druckfeder (42) zu verlassen, und die Verriegelungsstifte (433, 434) durch das innere Scharnierelement (2) und das äußere Scharnierelement (1) hindurchgehen, um den verriegelten Zustand zu erreichen.

10. Leiterscharnier mit doppelten Verriegelungsstiften nach Anspruch 1, wobei, wenn das innere Scharnierelement (1) relativ zum äußeren Scharnierelement (2) nach innen gedreht wird, um das Leiterscharnier zu schließen, die freien Enden der runden Verriegelungsstifte (433, 434) weiterhin gegen die zweite innere Scharnierschale (22) drücken, um eines der drei Paare der Positionierungslöcher (231, 232), (233, 234), (235, 236) zu berühren und in eines der drei Paare der Positionierungslöcher (231, 232), (233, 234), (235, 236) einzudringen, während das innere Scharnierteil (2) relativ zum äußeren Scharnierteil (1) kontinuierlich nach innen gedreht wird, um zu bewirken, dass die Umfänge des Paares der Positionierungslöcher (231, 232), (233, 234), (235, 236) die schrägen Bogenflächen (4332, 4342) an den freien Enden der runden Verriegelungsstifte (433, 434) drücken; wobei die Umfänge dazu führen, dass die zweite äußere Scharnierschale (12) an den Umfängen der Verriegelungslöcher (111, 112, 121, 122) trotz des Hineinschiebens und Herausbewegens der freien Enden der runden Verriegelungsstifte (433, 434) in die Haltenuten (4331, 4341) der runden Verriegelungsstifte (433, 434) durch die zweite innere Scharnierschale an den Umfängen des Paares der Positionierungslöcher (231, 232), (233, 234), (235, 236) nach außen gedrückt und bewegt werden, und das Leiterscharnier während des Schließens in dem unverriegelten Zustand bleibt.

11. Leiterscharnier mit doppelten Verriegelungsstiften nach Anspruch 1, wobei die erste und die zweite äußere Scharnierschale (11, 12) jeweils mit einer nach innen gerichteten Ausnehmung (13) versehen sind, die erste und die zweite innere Scharnierschale (21, 22) jeweils mit einem nach außen gerichteten Vorsprung (24) versehen sind, der der nach innen gerichteten Ausnehmung (13) entspricht, und die nach innen gerichteten Ausnehmung (13) und der äußere Vorsprung (24) einander zu dem Zeitpunkt berühren, zu dem das innere Scharnierelement (2) relativ zu dem äußeren Scharnierelement (1) um 180° nach außen gedreht wird, um zu verhindern, dass das innere Scharnierelement (2) über 180° hinaus gedreht wird; wobei die ersten und zweiten äußeren Scharnierschalen (11, 12) mit einem Eingriffsloch (15) neben den nach innen gerichteten Ausnehmungen (13) versehen sind, um mit einem Niet miteinander verbunden zu werden, der in der Lage ist, das innere Scharnierelement (2) daran zu hindern, über 180° hinaus relativ zu dem äußeren Scharnierelement (1) gedreht zu werden, um einen doppelten Schutz des inneren Scharnierelementes (2) davor zu bilden, um 180° gedreht zu werden, und die Festigkeit des Leiterscharniers zu verstärken, wenn das äußere Scharnierelement (1) und das innere Scharnierelement (2) um 180° voneinander entfernt sind.

12. Leiterscharnier mit doppelten Verriegelungsstiften nach Anspruch 1, wobei die erste und die zweite äußere Scharnierschale (11, 12) sowie die erste und die zweite innere Scharnierschale (21, 22) mit Verstärkungsrippen (5) versehen sind.

## Revendications

1. Charnière d'échelle avec deux goupilles de verrouillage, comprenant :
un organe de charnière externe (1) ayant une première coque de charnière externe (11) et une seconde coque de charnière externe (12) jointes de manière opposée avec deux trous de verrouillage opposés (111, 112), (121, 122), (111A, 112A), (121A, 122A) qui sont verticalement disposés au niveau des première et seconde coques de charnière externes (11, 12), respectivement ;
un organe de charnière interne (2) ayant une première coque de charnière interne (21) et une seconde coque de charnière interne (22) jointes de manière opposée avec trois paires de trous de positionnement (231, 232), (233, 234), (235, 236), (231A, 232A), (233A, 234A), (235A, 236A) qui sont disposés au niveau des première et seconde coques de charnière internes (21, 22) correspondant auxdits deux trous de verrouillage (111, 112), (121, 122), (111A, 112A), (121A, 122A), respectivement ;
un pivot (3) joignant l'organe de charnière externe (1) et l'organe de charnière interne (2) et permettant à l'organe de charnière interne (2) et à l'organe de charnière externe (1) de tourner l'un par rapport à l'autre ;
un dispositif de verrouillage consistant en un bouton-poussoir (41), un ressort de compression (42) et un ensemble goupille de verrouillage (43), dans lequel le bouton-poussoir (41) et le ressort de compression (42) sont disposés à l'extérieur de la première coque de charnière externe (11), deux extrémités du ressort de compression (42) sollicitent le pivot (3) et le bouton-poussoir (41) respectivement, l'ensemble goupille de verrouillage (43) fournit une poignée (431, 431A) disposée à l'extérieur de la seconde coque de charnière externe (12), un arbre de liaison (432) ayant une extrémité fixée à la poignée (431, 431A) et une autre extrémité traversant le pivot (3) et le ressort de compression (43) et fixée au bouton-poussoir (41), et deux goupilles de verrouillage (433, 434), (433A, 434A) étant disposées parallèlement à l'arbre de liaison (432) et correspondant aux trous de verrouillage (111, 112, 121, 122), (111A, 112A, 121A, 122A) de l'organe de charnière externe (1) avec chacune des goupilles de verrouillage (433, 434), (433A, 434A) ayant une extrémité attachée à la poignée (431, 431A) et une autre extrémité qui est une extrémité libre respectivement ;
**caractérisée en ce que** les goupilles de verrouillage (433, 434), (433A, 434A) sont munies d'une rainure de maintien (4331, 4341), (433A1, 434A1) respectivement près de leurs extrémités libres, et les deux rainures de maintien (4331, 4341, 433A1, 434A1) croisent partiellement les goupilles de verrouillage (433, 434), (433A, 434A) à partir de leurs périphéries et sont disposées de manière opposée pour faire face vers l'extérieur ; les goupilles de verrouillage (433, 434), (433A, 434A) sont en outre munies d'une surface arquée inclinée (4332, 4342) respectivement à leurs extrémités libres et sont disposées à l'arrière des rainures de maintien (4331, 4341, 433A1, 434A1) ; la seconde coque de charnière externe (12) aux périphéries des trous de verrouillage (111, 112, 121, 122), (111A, 112A, 121A, 122A) est capable d'être piégée dans les rainures de maintien (4331, 4341), (433A1, 434A1) pour qu'il en résulte que la charnière d'échelle soit à un état déverrouillé ; les surfaces arquées inclinées (4332, 4342), (433A2, 434A2) sont capables de presser contre la seconde coque de charnière interne (22) pour empêcher les périphéries des trous de verrouillage (111, 112, 121, 122), (111A, 112A, 121A, 122A) de quitter les rainures de maintien (4331, 4341), (433A1, 434A1) au moment où l'organe de charnière interne (2) est tourné vers l'intérieur par rapport à l'organe de charnière externe (1) pour effectuer une opération de fermeture.

2. Charnière d'échelle avec deux goupilles de verrouillage selon la revendication 1, dans laquelle les trous de verrouillage (111, 112, 121, 122) et les trous de positionnement (231, 232), (233, 234), (235, 236) sont des trous ronds.

3. Charnière d'échelle avec deux goupilles de verrouillage selon la revendication 2, dans laquelle les rainures de maintien (4331, 4341) des goupilles de verrouillage (433, 434) sont des rainures en forme de croissant de lune avec un fond circulaire ayant un rayon égal au rayon de la section transversale des goupilles de verrouillage respectives (433, 434) et une distance angulaire entre deux extrémités du fond circulaire par rapport à une ligne centrale de la section transversale est supérieure à 180°.

4. Charnière d'échelle avec deux goupilles de verrouillage selon la revendication 1, dans laquelle les trous de verrouillage (111A, 112A, 121A, 122A) et les trous de positionnement (231A, 232A), (233A, 234A), (235A, 236A) sont des trous carrés.

5. Charnière d'échelle avec deux goupilles de verrouillage selon la revendication 4, dans laquelle les rainures de maintien (433A1, 434A1) des goupilles de verrouillage (433A, 434A) sont des rainures de maintien rectilignes (433A1, 434A1) et la profondeur de chacune des rainures de maintien rectilignes (433A1, 434A1) est inférieure à un demi-côté de section transversale des goupilles de verrouillage carrées respectives (433A, 434A).

6. Charnière d'échelle avec deux goupilles de verrouillage selon la revendication 1, dans laquelle la poignée (431) est une poignée en forme de plaque circulaire.

7. Charnière d'échelle avec deux goupilles de verrouillage selon la revendication 1, dans laquelle la poignée (431A) est une poignée en forme de bouton.

8. Charnière d'échelle avec deux goupilles de verrouillage selon la revendication 1, dans laquelle le ressort de compression (42) est comprimé pendant que la charnière d'échelle est à l'état déverrouillé, et les extrémités libres des goupilles de verrouillage (433, 434), (433A, 434A) pressent contre la seconde coque de charnière interne (22) à cause de l'élasticité du ressort de compression (42).

9. Charnière d'échelle avec deux goupilles de verrouillage selon la revendication 1, dans laquelle lorsque l'organe de charnière interne (2) est tourné vers l'extérieur par rapport à l'organe de charnière externe (1), les extrémités libres des goupilles de verrouillage (433, 434) sont en contact et sont guidées dans l'une des trois paires des trous de positionnement (231, 232), (233, 234), (235, 236) de l'organe de charnière interne (2), et à ce moment-là, la seconde coque de charnière externe (12) aux périphéries des trous de verrouillage (111, 112, 121, 122) est bloquée par les rainures de maintien (4331, 4341) jusqu'à ce que les extrémités libres des goupilles de verrouillage pénètrent complètement dans ladite paire de trous de positionnement (231, 232), (233, 234), (235, 236) avec l'arbre de liaison (432) et le bouton-poussoir (41) se déplaçant conjointement avec les goupilles de verrouillage rondes (433, 434) ; sous les circonférences, le ressort de compression (42) est libéré de sa compression et la seconde coque de charnière externe (12) aux périphéries des trous de verrouillage (111, 112, 121, 122) est forcée de quitter les rainures de maintien (4331, 4341) par l'élasticité du ressort de compression (42), et les goupilles de verrouillage (433, 434) traversent l'organe de charnière interne (2) et l'organe de charnière externe (1) pour atteindre l'état verrouillé.

10. Charnière d'échelle avec deux goupilles de verrouillage selon la revendication 1, dans laquelle lorsque l'organe de charnière interne (1) est tourné vers l'intérieur par rapport à l'organe de charnière externe (2) pour fermer la charnière d'échelle, les extrémités libres des goupilles de verrouillage rondes (433, 434) continuent de presser contre la seconde coque de charnière interne (22) pour venir en contact avec l'une des trois paires des trous de positionnement (231, 232), (233, 234), (235, 236) et pénétrer dans celle-ci, juste à ce moment-là, l'organe de charnière interne (2) est tourné vers l'intérieur par rapport à l'organe de charnière externe (1) de manière continue pour amener les périphéries de ladite paire des trous de positionnement (231, 232), (233, 234), (235, 236) à pousser les surfaces arquées inclinées (4332, 4342) aux extrémités libres des goupilles de verrouillage rondes (433, 434) ; sous les circonférences, il en résulte que la seconde coque de charnière externe (12) aux périphéries des trous de verrouillage (111, 112, 121, 122) reste en place dans les rainures de maintien (4331, 4341) des goupilles de verrouillage rondes (433, 434) en dépit du fait que les extrémités libres des goupilles de verrouillage rondes (433, 434) soient poussées et déplacées vers l'extérieur par la seconde coque de charnière interne aux périphéries de la paire des trous de positionnement (231, 232), (233, 234), (235, 236), et la charnière d'échelle reste dans l'état déverrouillé pendant la fermeture.

11. Charnière d'échelle avec deux goupilles de verrouillage selon la revendication 1, dans laquelle les première et seconde coques de charnière externes (11, 12) sont respectivement munies d'un évidement vers l'intérieur (13), les première et seconde coques de charnière internes (21, 22) sont respectivement munies d'une saillie vers l'extérieur (24) correspondant à l'évidement vers l'intérieur (13), et l'évidement vers l'intérieur (13) et la saillie vers l'extérieur (24) sont en contact l'un avec l'autre au moment auquel l'organe de charnière interne (2) est tourné de 180° vers l'extérieur par rapport à l'organe de charnière vers l'extérieur (1) pour empêcher l'organe de charnière interne (2) d'être tourné au-delà de 180° ; les première et seconde coques de charnière externes (11, 12) sont munies d'un trou de mise en prise (15) à côté des évidements vers l'intérieur (13) pour être jointes l'une avec l'autre avec un rivet qui est capable d'empêcher l'organe de charnière interne (2) d'être tourné au-delà de 180° par rapport à l'organe de charnière externe (1) ainsi que pour constituer des doubles protections de l'organe de charnière interne (2) contre le fait d'être tourné de 180° et intensifier la résistance de la charnière d'échelle lorsque l'organe de charnière externe (1) et l'organe de charnière interne (2) sont à 180° l'un par rapport à l'autre.

12. Charnière d'échelle avec deux goupilles de verrouillage selon la revendication 1, dans laquelle les première et seconde coques de charnière externes (11, 12) et les première et seconde coques de charnière internes (21, 22) sont munies de nervures de renfort (5).
